# EUROPÄISCHE PATENTSCHRIFT

(11) **EP 2 997 272 B1**
(45) Veröffentlichungstag und Bekanntmachung des Hinweises auf die Patenterteilung: **29.03.2017**
(21) Anmeldenummer: 14723443.9
(22) Anmeldetag: 13.05.2014
(51) Int. Cl.: F16C 17/03, F16C 33/10

(54) **KIPPSEGMENT UND RADIALGLEITLAGER**
TILTING SEGMENT AND RADIAL BEARING
PATIN OSCILLANT ET PALIER LISSE RADIAL

(30) Priorität: 17.05.2013 DE 102013209199
(43) Veröffentlichungstag der Anmeldung: 23.03.2016
(73) Patentinhaber: Voith Patent GmbH, 89522 Heidenheim (DE)
(72) Erfinder: KÄMMERER, Steffen, 87509 Immenstadt (DE); RUDOLPH, Ralph, 87549 Rettenberg (DE)
(86) Internationale Anmeldenummer: PCT/EP2014/059715
(87) Internationale Veröffentlichungsnummer: WO 2014/184170

(56) Entgegenhaltungen:
- JP-A- H09 144 750
- JP-A- 2001 200 847
- JP-A- 2004 156 690
- JP-A- 2009 030 704
- JP-A- 2010 216 318

## Beschreibung

Die Erfindung betrifft ein Kippsegment, im Einzelnen mit den Merkmalen aus dem Oberbegriff von Anspruch 1. Die Erfindung betrifft ferner ein Radialgleitlager mit einem derartigen Kippsegment.

Radialgleitlager mit Kippsegmenten sind in unterschiedlichen Ausführungen aus dem Stand der Technik bekannt. Diese benötigen ein Schmier- und Kühlmittelversorgungssystem, welches die zur Realisierung der Gleitlagerfunktion erforderliche Schmiermittelmenge bereitstellt. Dabei wird das Schmier- und Kühlmittel in einen Bereich zwischen einem Kippsegment und dem Innenumfang des Lagergehäuses eingebracht und über die Welle in den Spalt zwischen dieser und der Abstützfläche eingezogen. Ein wesentliches Problem bei Gleitlagern stellt jedoch die bei der hydrodynamischen Gleitwirkung erzeugte Wärme dar. Um diese abzuführen, wird dazu bei Hochleistungsgleitlagern das zur hydrodynamischen Gleitwirkung eingesetzte Schmiermittel nach Möglichkeit nach Überstreichen der Abstützfläche des jeweiligen Kippsegmentes an diesen wieder abgeführt, um die von diesem aufgenommene Wärme nicht in das in Umlaufrichtung der Welle nächste Kippsegment einzuführen. Zur Abführung gelangen Abstreifeinrichtungen, die hinter der Auslaufkante positioniert sind, zum Einsatz. Die Anordnung der Abstreifvorrichtungen bedingt jedoch neben zusätzlichem Bauraum das Vorsehen weiterer Komponenten im Lager.

Die JP H09-144750 offenbart ein Gleitlager mit Kippsegmenten, welche zum Zweck der Schmiermittelabfuhr im Bereich der Auslaufkante, beabstandet von dieser eine sich über die Breite des Segmentes, d.h. in Axialrichtung erstreckende Nut aufweisen, aus welcher das Schmiermittel über einzelne Ablauföffnungen abgeführt wird. Diese Ausführung ist jedoch aufgrund der dadurch bereitgestellten Kante durch einen sehr starken Druckabfall im Schmierkeil beabstandet zur eigentlichen Auslaufkante für die Abstützung des Kippsegmentes charakterisiert, wodurch das Vorhandensein eines Schmierfilmes im Bereich der Auslaufkante nicht mehr sicher gewährleistet ist, was zu Schädigungen führen kann. Ferner bedingt die mit geringem Abstand zur Auslaufkante ausgebildete Abführnut mit der sich daran anschließenden Strömungskanalführung durch das Segment und entlang der Unterkante dessen eine Schwächung des Segmentes im Bereich der Auslaufkante.

Der Erfindung liegt daher die Aufgabe zugrunde, ein Radialgleitlager, der eingangs genannten Art derart weiterzuentwickeln, dass mit konstruktiv einfachen Mitteln bei gleichzeitig hoher Festigkeit des einzelnen Kippsegmentes eine einfache und sicher wirkende Abfuhr von Schmiermitteln nach Überstreichen der Abstützfläche eines Kippsegmentes erzielt und sicher verhindert wird, dass heißes Schleppöl in den in Umfangsrichtung nächsten Spalt zwischen Welle und einer Abstützfläche eingetragen wird. Die erfindungsgemäße Lösung soll konstruktiv einfach und kostengünstig sein.

Die erfindungsgemäße Lösung ist durch die Merkmale von Anspruch 1 und 12 charakterisiert. Vorteilhafte Ausgestaltungen sind in den Unteransprüchen beschrieben.

Ein erfindungsgemäß ausgebildetes Kippsegment zur beabstandeten Anordnung gegenüber einer Lagerachse zur Abstützung von Wellen in Gleitlagern mit einer Abstützfläche und einer der Abstützfläche gegenüber angeordneten Lagerfläche, wobei die Abstützfläche in Axialrichtung von zwei Seitenflächen und quer zu dieser (Querrichtung), insbesondere in Einbaulage betrachtet in Umfangsrichtung von einer Einlaufkante und einer Auslaufkante begrenzt ist, ist dadurch gekennzeichnet, dass an der Auslaufkante die Schmier- und Kühlmittelabfuhr fördernde Strukturen vorgesehen sind.

Unter "Strukturen" werden Mittel verstanden, die derart gestaltet und angeordnet sind, eine von einer Geraden abweichende Kontur der Auslaufkante erzeugen.

Diese sind in besonders vorteilhafter Ausbildung integral am Kippsegment ausgebildet und werden entweder bei der Herstellung mit eingearbeitet oder nachträglich durch Bearbeitung erzeugt. In einer alternativen Ausbildung können derartige Strukturen als separate Elemente zusätzlich der Auslaufkante zugeordnet bzw. an der Auslaufkante angeordnet werden.

Die erfindungsgemäße Lösung reduziert ein Überschwappen von heißem Schmiermittel, wie es an der Auslaufkante zwischen Welle und Segment in Drehrichtung der Welle vorliegt in Richtung der Einlaufkante des in Drehrichtung der Welle nachfolgenden Kippsegmentes und ein Einschleppen in den zwischen diesen und der Welle gebildeten Spalt

In einer vorteilhaften Weiterbildung sind zusätzlich an der Einlaufkante die Schmier- und Kühlmittelführung beeinflussende Strukturen vorgesehen. Diese erlauben eine zielgerichtete Verteilung und Anströmung der Abstützfläche über deren Erstreckung in Längsrichtung und damit eine gezielte Einstellung des Schmierfilms zwischen Welle und Kippsegment.

Die Wirkung der einzelnen Strukturen hinsichtlich der Schmier- und Kühlmittelführung oder Schmier- und Kühlmittelabfuhr an der jeweiligen Kante-Einlaufkante oder Auslaufkante - ist als Funktion zumindest einer der nachfolgenden Größen oder einer Kombination dieser einstellbar:
- Anzahl der Strukturen in Axial- bzw. Längsrichtung des Kippsegmentes
- Geometrie beziehungsweise Kontur der einzelnen Struktur
- Dimensionierung der einzelnen Struktur
- Anordnung und Ausrichtung der Strukturen zueinander in Axial- bzw. Längsrichtung des Kippsegmentes

Durch gezielte Ausführung der jeweiligen Kanten, kann die Schmier- und Kühlmittelversorgung über die gesamte Abstützfläche beziehungsweise die Abfuhr gezielt eingestellt werden.

Die einzelnen Strukturen an der Einlaufkante und/oder der Auslaufkante umfassen in vorteilhafter Ausbildung jeweils an der Ein- und/oder Auslaufkante angeordnete randoffene Aussparungen, die in Axialrichtung zueinander beabstandet angeordnet sind. Diese sind, da direkt am Kippsegment ausgebildet, besonders platzsparend. Die randoffenen Aussparungen erstrecken sich in Einbaulage betrachtet in Umfangsrichtung.

Bezüglich der Anordnung und Ausbildung der randoffenen Aussparungen besteht eine Vielzahl von Möglichkeiten. Gemäß einer ersten Ausbildung sind die jeweils an einer der Kanten - Einlaufkante und/oder Auslaufkante - angeordneten einzelnen randoffenen Aussparungen - hinsichtlich zumindest einer oder einer Kombination nachfolgend genannter Größen gleich ausgeführt:
- Geometrie
- Dimensionierung
- Abstand zwischen benachbarten Aussparungen

Gemäß einer zweiten Ausbildung sind die jeweils an zumindest einer der Kanten - Einlaufkante und/oder Auslaufkante - angeordneten einzelnen randoffenen Aussparungen - hinsichtlich zumindest einer oder einer Kombination nachfolgend genannter Größen verschieden ausgeführt:
- Geometrie
- Dimensionierung
- Abstand zwischen benachbarten Aussparungen

Die erste Ausbildung bietet den Vorteil einer besonders einfachen Herstellbarkeit. Die zweite Ausbildung erlaubt eine gezieltere Einstellbarkeit der Schmier- und/oder Kühlmittelabfuhr.

Die einzelne randoffene Aussparung weist entweder eine über die Erstreckung senkrecht zur Längsrichtung, insbesondere Vertikalrichtung konstante Querschnittsgeometrie auf oder ist durch eine Querschnittsveränderung charakterisiert. Über letztere kann eine verbesserte Saugwirkung erzielt werden, die zu einer verbesserten Abfuhr von Schleppöl an der Auslaufkante führt.

Die Querschnittsgeometrie von der Kante in das Segment ist vorzugsweise durch eine Querschnittsänderung charakterisiert. Denkbar ist auch eine Ausführung mit unveränderlichem Querschnitt.

Hinsichtlich der Geometrie der randoffenen Aussparungen bestehen keine Beschränkungen. Vorzugsweise ist die die Geometrie der einzelnen randoffenen Aussparung durch ein Element der nachfolgend genannten Gruppe oder eine Kombination beschreibbar;
- Kreis
- Ellipse
- Vieleck

In einer besonders vorteilhaften Weiterbildung sind die randoffenen Aussparungen an der Einlaufkante symmetrisch bezüglich der Längsachse zu den Aussparungen an der Auslaufkante angeordnet und ausgeführt. Dies ermöglicht die Bereitstellung von Kippsegmenten, die unabhängig von der Drehrichtung der abzustützenden Welle in einem Radialgleitlager eingebaut werden können.

Diese Ausbildung ist fertigungstechnisch mit minimalem Aufwand realisierbar.
Die in axialer Richtung beabstandet angeordneten Schmier- und Kühlmittelführung fördernden Strukturen an der Einlaufkante und/oder die Schmier- und Kühlmittelabfuhr fördernden Strukturen an der Auslaufkante umfassen wenigstens drei, vorzugsweise wenigstens vier randoffenen Aussparungen, vorzugsweise eine Mehrzahl. (Bitte prüfen!)

Dieses kann in einer vorteilhaften Ausbildung mit einem Lagergehäuse mit einer entlang einer Lagerachse ausgerichteten Lagerbohrung und mehreren relativ zum Lagergehäuse bewegbar und beabstandet zur Lagerachse in Umfangsrichtung um diese angeordneten Kippsegmenten zum Lagern einer Welle ausgeführt sein, wobei das einzelne Kippsegment jeweils eine radial äußere Lagerfläche zur Abstützung an einer Tragfläche an einem im Lagergehäuse geführten Druckblock aufweist. Der einzelne Druckblock stützt sich entweder direkt am Lagergehäuse ab oder ist frei von einer Abstützung am Lagergehäuse in radialer Richtung bewegbar in einer sich in radialer Richtung durch das Lagergehäuse erstreckenden Durchgangsöffnung geführt und mittels einer Verdrehsicherung gegenüber Verdrehung in Umfangsrichtung der Durchgangsöffnung gesichert und der von der Lagerfläche weggerichtete Endbereich schließt bündig mit dem Außenumfang des Lagergehäuses ab.

Die erfindungsgemäße Lösung wird nachfolgend anhand von Figuren erläutert. Darin ist im Einzelnen folgendes dargestellt:
- Figur 1: zeigt in schematisiert vereinfachter Darstellung den Grundaufbau eines erfindungsgemäßen Kippsegmentes mit die Schmier- und Kühlmittelabfuhr fördernden Strukturen an der Auslaufkante;
- Figur 2: zeigt in schematisiert vereinfachter Darstellung den Grundaufbau eines erfindungsgemäßen Kippsegmentes mit die Schmier- und Kühlmittelführung beeinflussenden Strukturen an der Einlaufkante;
- Figuren 3a bis 3f: zeigen mögliche Anordnungen und Ausführungen randoffener Aussparungen an der Auslaufkante;
- Figur 4: zeigt in schematisiert vereinfachter Darstellung eine mögliche Variation der Abstände zwischen Strukturen an der Auslaufkante;
- Figur 5: zeigt eine vorteilhafte Anwendung eines erfindungsgemäßen Kippsegmentes in einem Radialgleitlager.

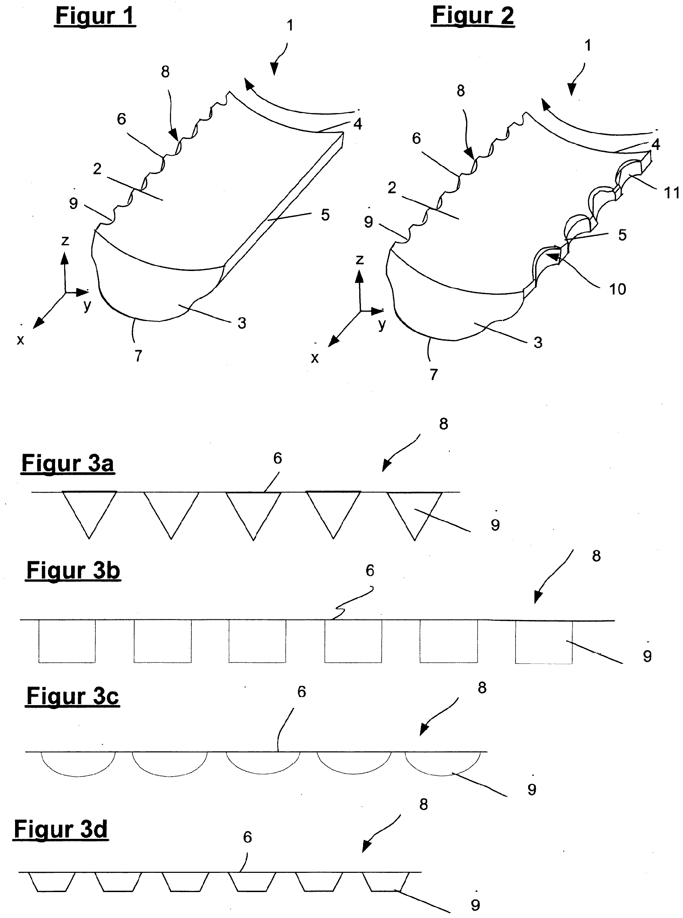

Die Figur 1 verdeutlicht in schematisiert vereinfachter Darstellung anhand einer Perspektivansicht den Grundaufbau und die Grundfunktion eines erfindungsgemäß ausgeführten Kippsegmentes 1 zur Abstützung von Wellen in Gleitlagern, insbesondere Radialgleitlagern. Zur Verdeutlichung der einzelnen Richtungen ist ein Koordinatensystem an das Kippsegment 1 angelegt. Die X-Achse beschreibt dabei die in Einbaulage im Gleitlager vorliegende Axialrichtung und entspricht der Längsrichtung des Kippsegmentes 1. Die Y-Richtung beschreibt die Erstreckung quer zur Axialrichtung bzw. Längsrichtung. Das Kippsegment 1 weist eine Abstützfläche 2 auf, welche in Einbaulage in einem Radiallager der radial inneren Fläche entspricht. Die Abstützfläche 2 wird in Axialrichtung von den Seitenflächen 3 und 4 begrenzt, die in besonders vorteilhafter Ausbildung parallel zueinander angeordnet sind. Die Abstützfläche 2 ist quer zur Axialrichtung durch eine erste Kante und eine zweite Kante begrenzt, die in Einbaulage jeweils einer Einlaufkante 5 und einer Auslaufkante 6 entsprechen. Die Begrifflichkeit Einlaufkante und Auslaufkante bezieht sich dabei auf die Anordnung des Kippsegmentes 1 gegenüber einer Welle und deren Drehrichtung. Die in Drehrichtung der Welle dabei zuerst erreichte Kante wird als Einlaufkante 5 bezeichnet, die in Drehrichtung hinter der Einlaufkante liegende Kante als Auslaufkante 6. Der Abstützfläche 2 gegenüberliegend ist eine Lagerfläche 7 vorgesehen, die von der Abstützfläche 2 weggerichtet ausgebildet ist. Die Einlaufkante 5 bzw. die Auslaufkante 6 gehen dabei entweder direkt oder über entsprechende Zwischenflächenbereiche in die Lagerfläche 7 über. Erfindungsgemäß sind zur Abfuhr des im Betrieb über das Kippsegment 1 geführten Schmier- und/oder Kühlmediums, insbesondere von Schleppöl die Schmier- und Kühlmittelabfuhr fördernde Strukturen vorgesehen, sodass die Auslaufkante eine von einer Geraden abweichende Struktur aufweist. Die einzelnen an der Auslaufkante 6 angeordneten Strukturen 8 sind im einfachsten Fall als randoffene Aussparungen ausgebildet. Die randoffenen Aussparungen 9 sind zueinander beabstandet in Axialrichtung des Kippsegmentes 1 angeordnet. Die Figur 1 verdeutlicht eine Ausführung mit gleichmäßiger Anordnung in Axialrichtung, d.h. die Aussparungen 9 sind hinsichtlich ihrer Geometrie und des Abstandes zueinander in Axialrichtung gleich dimensioniert.

Die Einlaufkante 5 ist in Figur 1 hinsichtlich ihrer Kontur durch eine Gerade beschreibbar. In einem Radialgleitlager 13 ist damit die Einbaurichtung für die Segmente 1 in Abhängigkeit von der Drehrichtung der abzustützenden Wellen vorgegeben.

Die Figur 2 verdeutlicht eine vorteilhafte Weiterbildung einer Ausführung eines Kippsegmentes 1 gemäß Figur 1. Dieses ist auch an der Einlaufkante 5 strukturiert ausgeführt, das heißt weist die Schmier- und Kühlmittelführung beeinflussende Strukturen 10 auf. Diese sind in besonders vorteilhafter Ausführung in Analogie zu Ausführungen der Strukturen 8 an der Auslaufkante als randoffene Aussparungen 11 ausgeführt. Die Funktion dieser besteht in einer verbesserten Zufuhr von Schmiermittel in den zwischen der Abstützfläche und der abzustützenden Welle gebildeten Spalt. Dazu sind, jedoch hier nicht dargestellt, den einzelnen randoffenen Aussparungen 11 Düsen zugeordnet, die das Schmieröl direkt in die Aussparungen einbringen.

Bezüglich der Ausbildung der einzelnen randoffenen Aussparung 9 besteht eine Vielzahl von Möglichkeiten. Die Figuren 3a bis 3f verdeutlichen beispielhaft mögliche Ausführungen für die der Auslaufkante 6 zugeordneten Strukturen 8. Die Ausführungen gelten in Analogie auch für die der Einlaufkante 5 zugeordneten Strukturen. Die Wiedergabe in den Figuren zeigt jedoch nur die Strukturen 8 der Auslaufkante 6.

Im Einzelnen zeigen die Figuren 3a bis 3d mögliche vorteilhafte Querschnittsgeometrien für die randoffenen Aussparungen an der Auslaufkante 6. Als Querschnittsgeometrie wird dabei die Querschnittsfläche verstanden, die durch die randoffene Aussparung 9 bei Projizierung in eine mit der Längsachse in einer senkrechten zu dieser gebildeten horizontalen Ebene beschrieben wird. Es versteht sich, dass die folgenden Aussagen auch für die Schmier- und Kühlmittelführung beeinflussenden Strukturen 10 an der Einlaufkante 5 gelten.

Gemäß Figur 3a weist die randoffene Aussparung 9 bzw. 11 einen dreiecksförmigen Querschnitt auf, Figur 3b zeigt eine mögliche Ausführung mit vieleckigen, insbesondere rechteckigem Querschnitt, die Figur 3c einen halbkreisförmigen oder elliptischen Querschnitt und die Figur 3d einen sich in Richtung zur jeweiligen Ein- oder Auslaufkante erweiternden Querschnitt am Beispiel einer Trapezform.

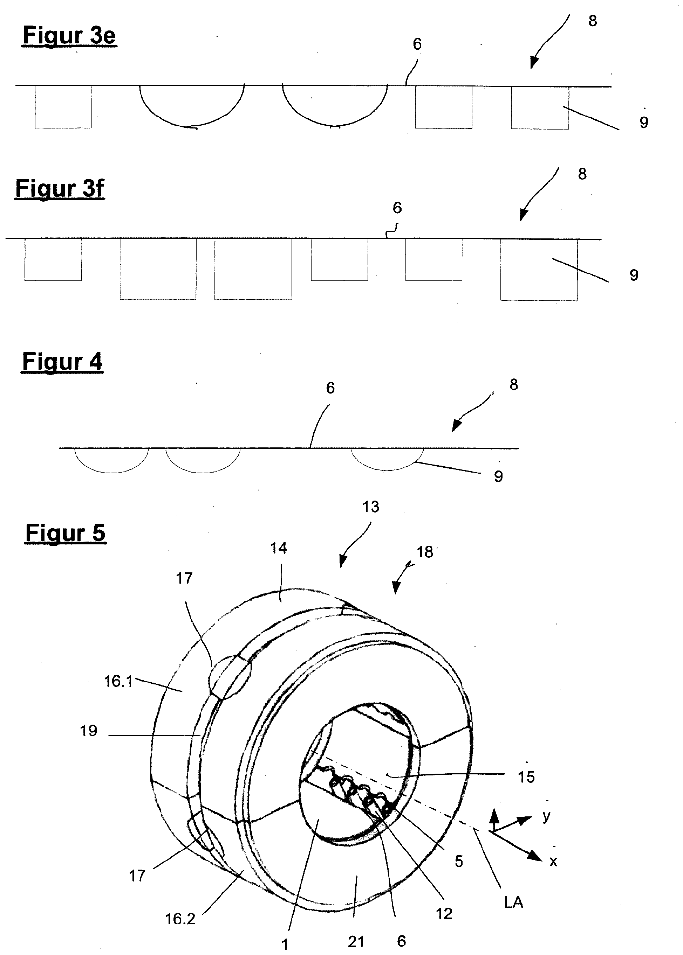

Zeigen die Figuren 3a bis 3d eine Anordnung von hinsichtlich der Dimensionierung, Art des Querschnitts gleichen randoffenen Aussparungen über den Verlauf der Ein- bzw. Auslaufkante, ist es auch denkbar unterschiedliche Varianten in Axialrichtung des Kippsegmentes 1 betrachtet miteinander zu kombinieren. Eine derartige Ausführung ist beispielhaft in der Figur 3e wiedergegeben, welche beispielhaft eine Vieleckform mit einer elliptischen Form kombiniert.

Verdeutlichen die Figuren 3a bis 3d Ausführungen, bei denen die Dimensionierung aller randoffenen Aussparungen identisch ist, ist es ferner denkbar, neben einer Variation der Konturen auch die Dimensionierung der einzelnen randoffenen Aussparungen 9 bzw. 11 über die Erstreckung des Kippsegmentes 1 in Axialrichtung zu variieren. Ein Beispiel ist in der Figur 3f wiedergegeben. Daraus ist ersichtlich, dass beispielsweise bei vieleckigen randoffenen Aussparungen 9 die Dimensionierung zwischen den randoffenen Aussparungen 9 in den Randbereichen und dem Mittenbereich differiert.

Ferner ist es denkbar, dass auch die Querschnittsgeometrie in vertikaler Richtung variieren kann. Insbesondere ist in vertikaler Richtung bzw. in Richtung zwischen der Abstützfläche 2 und der Tragfläche betrachtet eine Verjüngung der randoffenen Aussparung 9 von besonderem Vorteil.

Figur 4 zeigt beispielhaft, dass auch die Abstände zwischen randoffenen Aussparungen 9 in Axialrichtung variieren können. Dies gilt sowohl für die Kombination aus randoffenen Aussparungen 9 gleichen Typs als auch Kombinationen unterschiedlicher Typen, wobei ein Typ jeweils durch eine bestimmte Geometrie und bestimmte Abmessungen charakterisiert ist.

Die Aussagen in Figur 4 gelten in Analogie auch für die Aussparungen 11 an der Einlaufkante 5.

Die Figur 5 verdeutlicht den Einsatz eines erfindungsgemäßen Kippsegmentes 1 in einem Radialgleitlager 13. Dieses ist beispielhaft in einer Perspektivansicht wiedergegeben. Das Radialgleitlager 13 umfasst ein Lagergehäuse 14 mit einer sich entlang einer Längsachse erstreckenden Lagerbohrung 15, wobei die Längsachse gleichzeitig die Lagerachse LA bildet und die Axialrichtung beschreibt. Das Lagergehäuse 14 kann von einer zylindrischen Hülse gebildet werden. Vorzugsweise besteht dieses aus zumindest zwei Halbschalen 16.1, 16.2. Denkbar ist auch eine Ausführung aus mehreren Teilschalen, die in Umfangsrichtung um die Lagerachse LA einander benachbart angeordnet sind und miteinander kraft- und/oder formflüssig verbindbar sind. Das Radialgleitlager 13 umfasst ferner mehrere, relativ zum Lagergehäuse 2 beweglich angeordnete und beabstandet zur Lagerachse LA in Umfangsrichtung um diese zueinander benachbart angeordnete erfindungsgemäße Kippsegmente 1. Die Kippsegmente dienen einer hier nicht dargestellten Welle um ihre Achse. Diese umfassen in Einbaulage in radialer Richtung ausgehend von der Lagerachse betrachtet dazu jeweils die radial innere Abstützfläche 2 und eine radial äußere Lagerfläche 7, mit welcher sich die Kippsegmente 1 wenigstens mittelbar an einem Anschlussbauteil, insbesondere einer Tragfläche abstützen. Vorzugsweise erfolgt die Abstützung an einem hier im Einzelnen nicht dargestellten Druckblock 17 entweder direkt am Lagergehäuse 14 oder aber an der Lagerumgebung. Das Radialgleitlager 13 weist ein Schmier- und Kühlmittelversorgungssystem 18 auf. Dieses umfasst im dargestellten Fall beispielhaft eine im Außenumfang in das Lagergehäuse in axialer Richtung mittig eingearbeitete Ringnut 19, die zur Schmiermittelversorgung über sich durch das Lagergehäuse erstreckende Verbindungskanäle mit einem zwischen den Kippsegmenten 1 und den Innenumfang des Lagergehäuses gebildeten Zwischenraum gekoppelt sind. In besonders vorteilhafter Ausbildung ist im Bereich der Einlaufkante 5 eine Ölzufuhrleiste 12 vorgesehen, die mit der Ringnut 19 über die Verbindungskanäle in leitender Verbindung steht. Die Ölzufuhrleisten 12 und die Ölkanäle sind gegenüber einem Radialstrahl vorzugsweise geneigt. Die Längsachse der Ölkanäle ist somit in einem achssenkrechten Schnitt durch die Lagerachse nach Art von Sekanten an den von der Mantelfläche der Welle begrenzten Kreis angeordnet. Jede der Ölzufuhrleisten weist vorzugsweise Gewindebohrungen zum Einschrauben von Dosierschrauben auf. An der Auslaufkante 6 ist das Kippsegment 1 mit den erfindungsgemäß ausgeführten Strukturen 8 ausgebildet.

### Bezugszeichenliste

- 1: Kippsegment
- 2: Abstützfläche
- 3: Seitenfläche
- 4: Seitenfläche
- 5: erste Kante, Einlaufkante
- 6: zweite Kante, Auslaufkante
- 7: Lagerfläche
- 8: die Schier- und Kühlmittelabfuhr fördernde Strukturen
- 9: randoffene Aussparungen
- 10: die Schier- und Kühlmittelführung beeinflussende Strukturen
- 11: randoffene Aussparungen
- 12: Ölzufuhrleiste
- 13: Radialgleitlager
- 14: Lagergehäuse
- 15: Lagerbohrung
- 16.1, 16.2: Halbschalen
- 17: Druckblock
- 18: Schmier- und Kühlmittelversorgungssystem
- 19: Ringnut
- LA: Lagerachse
- X, Y: Koordinate

## Patentansprüche

1. Kippsegment (1) zur beabstandeten Anordnung gegenüber einer Lagerachse (LA) zur Abstützung von Wellen in Gleitlagern mit einer Abstützfläche (2) und einer der Abstützfläche (2) gegenüber angeordneten Lagerfläche (7), wobei die Abstützfläche (2) in Axialrichtung von zwei Seitenflächen (3, 4) und quer zu dieser, insbesondere in Einbaulage in Umfangsrichtung von einer Einlaufkante (5) und einer Auslaufkante (6) begrenzt ist, wobei an der Auslaufkante (6) die Schmier- und Kühlmittelabfuhr (8) fördernde Strukturen (8) vorgesehen sind.
**dadurch gekennzeichnet,**
**dass** die an der Auslaufkante (6) die Schmier- und Kühlmittelabfuhr (8) fördernden Strukturen (8) an der Auslaufkante (6) angeordnete randoffene Aussparungen (11) umfassen, die in Axialrichtung des Kippsegmentes (1) betrachtet zueinander beabstandet angeordnet sind.

2. Kippsegment (1) nach Anspruch 1,
**dadurch gekennzeichnet,**
**dass** an der Einlaufkante (5) die Schmier- und Kühlmittelführung beeinflussende Strukturen (10) vorgesehen sind.

3. Kippsegment (1) nach einem der Ansprüche 1 oder 2,
**dadurch gekennzeichnet,**
**dass** die Wirkung der einzelnen, die Schmier- und Kühlmittelführung beeinflussenden Strukturen (10) und/oder die Schmier- und Kühlmittelabfuhr fördernden Strukturen (8) an der jeweiligen Kante - Einlaufkante (5) oder Auslaufkante (6) - als Funktion zumindest einer der nachfolgenden Größen oder einer Kombination dieser einstellbar ist:
- Anzahl der Strukturen (8, 10) in Axial- bzw. Längsrichtung des Kippsegmentes
- Geometrie beziehungsweise Kontur der einzelnen Struktur (8, 10)
- Dimensionierung der einzelnen Struktur (8, 10)
- Anordnung und Ausrichtung der Strukturen (8, 10) zueinander in Axial- bzw. Längsrichtung des Kippsegmentes

4. Kippsegment (1) nach einem der Ansprüche 2 bis 3,
**dadurch gekennzeichnet,**
**dass** die einzelnen, die Schmier- und Kühlmittelführung beeinflussenden Strukturen (10) an der Einlaufkante (5) angeordnete randoffene Aussparungen (9) umfassen, die in Axialrichtung des Kippsegmentes (1) betrachtet zueinander beabstandet angeordnet sind.

5. Kippsegment (1) nach Anspruch 4,
**dadurch gekennzeichnet,**
**dass** die jeweils an einer der Kanten - Einlaufkante (5) und/oder Auslaufkante (6) - angeordneten einzelnen randoffenen Aussparungen (9, 11) hinsichtlich zumindest einer oder einer Kombination nachfolgend genannter Größen gleich ausgeführt sind:
- Geometrie
- Dimensionierung
- Abstand zwischen benachbarten Aussparungen

6. Kippsegment (1) nach Anspruch 4,
**dadurch gekennzeichnet,**
**dass** die jeweils an zumindest einer der Kanten - Einlaufkante (5) und/oder Auslaufkante (6) - angeordneten einzelnen randoffenen Aussparungen (9, 11) hinsichtlich zumindest einer oder einer Kombination nachfolgend genannter Größen verschieden ausgeführt sind:
- Geometrie
- Dimensionierung
- Abstand zwischen benachbarten Aussparungen

7. Kippsegment (1) nach einem der Ansprüche 4 bis 6,
**dadurch gekennzeichnet,**
**dass** die einzelne randoffene Aussparung (9, 11) über die Erstreckung senkrecht zur Axial- bzw. Längsrichtung, insbesondere in Vertikalrichtung des Kippsegmentes betrachtet eine konstante Querschnittsgeometrie aufweist.

8. Kippsegment (1) nach einem der Ansprüche 4 bis 6,
**dadurch gekennzeichnet,**
**dass** die einzelne randoffene Aussparung (9, 11) über die Erstreckung senkrecht zur Axial- bzw. Längsrichtung, insbesondere in Vertikalrichtung des Kippsegmentes betrachtet eine Querschnittsveränderung aufweist.

9. Kippsegment (1) nach einem der Ansprüche 1 bis 8,
**dadurch gekennzeichnet,**
**dass** die Geometrie der randoffenen Aussparungen (9, 11) durch ein Element der nachfolgend genannten Gruppe oder eine Kombination beschreibbar ist;
- Kreis
- Ellipse
- Vieleck

10. Kippsegment (1) nach einem der Ansprüche 2 bis 9,
**dadurch gekennzeichnet,**
**dass** die randoffenen Aussparungen (11) an der Einlaufkante (5) symmetrisch bezüglich einer Längsachse des Kippsegmentes (1) zu den Aussparungen (9) an der Auslaufkante (6) angeordnet und ausgeführt sind.

11. Kippsegment (1) nach einem der Ansprüche 1 bis 10,
**dadurch gekennzeichnet,**
**dass** die Schmier- und Kühlmittelführung fördernden Strukturen (7) an der Einlaufkante (5) und/oder die Schmier- und Kühlmittelabfuhr fördernden Strukturen (8) an der Auslaufkante (6) wenigstens drei, vorzugsweise wenigstens vier randoffenen Aussparungen (11) umfassen.

12. Radialgleitlager (13) mit einem Kippsegment (1) gemäß einem der Ansprüche 1 bis 11.

13. Radialgleitlager (13) nach Anspruch 12
mit einem Lagergehäuse (14) mit einer entlang einer Lagerachse (LA) ausgerichteten Lagerbohrung (15) und mehreren relativ zum Lagergehäuse (14) bewegbar und beabstandet zur Lagerachse (LA) in Umfangsrichtung um diese angeordneten Kippsegmenten (1) zum Lagern einer Welle, wobei das einzelne Kippsegment (1) jeweils eine radial äußere Lagerfläche (7) zur Abstützung an einer Tragfläche an einem im Lagergehäuse (14) geführten Druckblock (17) aufweist; wobei
der einzelne Druckblock (17) frei von einer Abstützung am Lagergehäuse (14) in radialer Richtung bewegbar in einer sich in radialer Richtung durch das Lagergehäuse (14) erstreckenden Durchgangsöffnung geführt ist, mittels einer Verdrehsicherung gegenüber Verdrehung in Umfangsrichtung der Durchgangsöffnung gesichert ist und der von der Lagerfläche weggerichtete Endbereich bündig mit dem Außenumfang des Lagergehäuses (14) abschließt.

## Claims

1. Tilting segment (1) for being arranged in a spaced apart manner with respect to a bearing axis (LA) for supporting shafts in plain bearings with a supporting face (2) and a bearing face (7) which is arranged opposite the supporting face (2), the supporting face (2) being delimited in the axial direction by two side faces (3, 4) and transversely with respect to this, in particular in the installed position, in the circumferential direction by an inlet edge (5) and an outlet edge (6), structures (8) which promote the lubricant and coolant discharge (8) being provided on the outlet edge (6), **characterized in that** the structures (8) which promote the lubricant and coolant discharge (8) on the outlet edge (6) comprise cut-outs (11) which are arranged on the outlet edge (6), are open at the edges, and are arranged so as to be spaced apart from one another as viewed in the axial direction of the tilting segment (1).

2. Tilting segment (1) according to Claim 1, **characterized in that** structures (10) which influence the lubricant and coolant routing are provided on the inlet edge (5).

3. Tilting segment (1) according to either of Claims 1 and 2, **characterized in that** the effect of the individual structures (10) which influence the lubricant and coolant routing and/or structures (8) which promote the lubricant and coolant discharge can be set on the respective edge (inlet edge (5) or outlet edge (6)) as a function of at least one of the following variables or a combination thereof:
- number of structures (8, 10) in the axial or longitudinal direction of the tilting segment
- geometry or contour of the individual structure (8, 10)
- dimensioning of the individual structure (8, 10)
- arrangement and orientation of the structures (8, 10) with respect to one another in the axial or longitudinal direction of the tilting segment.

4. Tilting segment (1) according to either of Claims 2 and 3, **characterized in that** the individual structures (10) which influence the lubricant and coolant routing comprise cut-outs (9) which are arranged on the inlet edge (5), are open at the edges, and are arranged so as to be spaced apart from one another as viewed in the axial direction of the tilting segment (1).

5. Tilting segment (1) according to Claim 4, **characterized in that** the individual cut-outs (9, 11) which are arranged on one of the edges (inlet edge (5) and/or outlet edge (6)) and are open at the edges are of identical configuration with regard to at least one or a combination of the variables mentioned in the following text:
- geometry
- dimensioning
- spacing between adjacent cut-outs.

6. Tilting segment (1) according to Claim 4, **characterized in that** the individual cut-outs (9, 11) which are arranged in each case on at least one of the edges (inlet edge (5) and/or outlet edge (6)) and are open at the edges are of different configuration with regard to at least one or a combination of the variables mentioned in the following text:
- geometry
- dimensioning
- spacing between adjacent cut-outs.

7. Tilting segment (1) according to one of Claims 4 to 6, **characterized in that** the individual cut-out (9, 11) which is open at the edges has a constant cross-sectional geometry as viewed over the extent perpendicularly with respect to the axial or longitudinal direction, in particular in the vertical direction of the tilting segment.

8. Tilting segment (1) according to one of Claims 4 to 6, **characterized in that** the individual cut-out (9, 11) which is open at the edges has a cross-sectional change as viewed over the extent perpendicularly with respect to the axial or longitudinal direction, in particular in the vertical direction of the tilting segment.

9. Tilting segment (1) according to one of Claims 1 to 8, **characterized in that** the geometry of the cut-outs (9, 11) which are open at the edges can be described by an element of the group mentioned in the following text or a combination thereof:
- circle
- ellipse
- polygon.

10. Tilting segment (1) according to one of Claims 2 to 9, **characterized in that** the cut-outs (11) on the inlet edge (5) which are open at the edges are arranged and configured symmetrically with regard to a longitudinal axis of the tilting segment (1) with respect to the cut-outs (9) on the outlet edge (6).

11. Tilting segment (1) according to one of Claims 1 to 10, **characterized in that** the structures (10) which promote lubricant and coolant routing on the inlet edge (5) and/or the structures (8) which promote lubricant and coolant discharge on the outlet edge (6) comprise at least three, preferably at least four cut-outs (11) which are open at the edges.

12. Radial plane bearing (13) having a tilting segment (1) according to one of Claims 1 to 11.

13. Radial plane bearing (13) according to Claim 12 having a bearing housing (14) with a bearing bore (15) which is oriented along a bearing axis (LA) and a plurality of tilting segments (1) for mounting a shaft, which tilting segments (1) can be moved relative to the bearing housing (14) and are arranged spaced apart from the bearing axis (LA) in the circumferential direction around the latter, the individual tilting segment (1) in each case having a radially outer bearing face (7) for support on a bearing face on a pressure block (17) which is guided in the bearing housing (14); the individual pressure block (17) being guided in a through opening which extends in the radial direction through the bearing housing (14), in such a way that it can be moved in the radial direction in a manner which is free from support on the bearing housing (14), being secured by means of an anti-rotation safeguard against rotation in the circumferential direction of the through opening, and the end region which is directed away from the bearing face terminating flush with the outer circumference of the bearing housing (14).

## Revendications

1. Patin oscillant (1) pour l'agencement espacé par rapport à un axe de palier (LA) destiné à supporter des arbres dans des paliers lisses avec une face de support (2) et une face d'appui (7) disposée à l'opposé de la face de support (2), dans lequel la face de support (2) est limitée en direction axiale par deux faces latérales (3, 4) et transversalement à celle-ci, en particulier en position de montage, en direction périphérique par une arête d'entrée (5) et une arête de sortie (6), dans lequel il est prévu à l'arête de sortie (6) des structures (8) favorisant l'évacuation de lubrifiant et de réfrigérant, **caractérisé en ce que** les structures (8) favorisant l'évacuation de lubrifiant et de réfrigérant (8) à l'arête de sortie (6) comprennent des découpes (11) à bord ouvert disposée à l'arête de sortie (6), qui sont disposées à distance l'une de l'autre en considérant la direction axiale du patin oscillant (1).

2. Patin oscillant (1) selon la revendication 1, **caractérisé en ce qu'**il est prévu à l'arête d'entrée (5) des structures (10) influençant le guidage de lubrifiant et de réfrigérant.

3. Patin oscillant (1) selon une des revendications 1 ou 2, **caractérisé en ce que** l'action individuelle des structures (10) influençant le guidage de lubrifiant et de réfrigérant et/ou des structures (8) favorisant l'évacuation de lubrifiant et de réfrigérant à l'arête respective - arête d'entrée (5) ou arête de sortie (6)
- est réglable en fonction d'au moins une des grandeurs suivantes ou d'une combinaison de celles-ci:
- nombre des structures (8, 10) en direction axiale ou longitudinale du patin oscillant,
- géométrie respectivement contour de la structure individuelle (8, 10),
- dimensionnement de la structure individuelle (8, 10),
- agencement et alignement des structures (8, 10) l'une par rapport à l'autre en direction axiale ou longitudinale du patin oscillant.

4. Patin oscillant (1) selon une des revendications 2 à 3, **caractérisé en ce que** les structures individuelles (10) influençant le guidage de lubrifiant et de réfrigérant comprennent des découpes à bord ouvert (9) disposées à l'arête d'entrée (5), qui sont disposées à distance l'une de l'autre en considérant la direction axiale du patin oscillant (1).

5. Patin oscillant (1) selon la revendication 4, **caractérisé en ce que** les découpes individuelles à bord ouvert (9, 11) disposées respectivement à l'une des arêtes - arête d'entrée (5) et/ou arête de sortie (6) - sont réalisées de manière identique en ce qui concerne au moins une ou une combinaison des grandeurs mentionnées ci-dessous:
- géométrie,
- dimensionnement,
- distance entre des découpes voisines.

6. Patin oscillant (1) selon la revendication 4, **caractérisé en ce que** les découpes individuelles à bord ouvert (9, 11) disposées respectivement à au moins une des arêtes - arête d'entrée (5) et/ou arête de sortie (6) - sont réalisées de manière différente en ce qui concerne au moins une ou une combinaison des grandeurs mentionnées ci-dessous:
- géométrie,
- dimensionnement,
- distance entre des découpes voisines.

7. Patin oscillant (1) selon l'une quelconque des revendications 4 à 6, **caractérisé en ce que** la découpe individuelle à bord ouvert (9, 11) présente, sur l'extension perpendiculairement à la direction axiale ou longitudinale, en particulier en considérant en direction verticale du patin oscillant, une géométrie de section transversale constante.

8. Patin oscillant (1) selon l'une quelconque des revendications 4 à 6, **caractérisé en ce que** la découpe individuelle à bord ouvert (9, 11) présente, sur l'extension perpendiculairement à la direction axiale ou longitudinale, en particulier en considérant en direction verticale du patin oscillant, une variation de la section transversale.

9. Patin oscillant (1) selon l'une quelconque des revendications 1 à 8, **caractérisé en ce que** la géométrie des découpes à bord ouvert (9, 11) peut être décrit par un élément du groupe mentionné ci-dessous ou par une combinaison de ceux-ci:
- cercle,
- ellipse,
- polygone.

10. Patin oscillant (1) selon l'une quelconque des revendications 2 à 9, **caractérisé en ce que** les découpes à bord ouvert (11) à l'arête d'entrée (5) sont disposées et réalisées de façon symétrique aux découpes (9) à l'arête de sortie (6) par rapport à un axe longitudinal du patin oscillant (1).

11. Patin oscillant (1) selon l'une quelconque des revendications 1 à 10, **caractérisé en ce que** les structures (10) favorisant le guidage de lubrifiant et de réfrigérant à l'arête d'entrée (5) et/ou les structures (8) favorisant l'évacuation de lubrifiant et de réfrigérant à l'arête de sortie (6) comprennent au moins trois, de préférence au moins quatre découpes à bord ouvert (11).

12. Palier lisse radial (13) avec un patin oscillant (1) selon l'une quelconque des revendications 1 à 11.

13. Palier lisse radial (13) selon la revendication 12, avec un corps de palier (14) présentant un alésage de palier (15) orienté le long d'un axe longitudinal (LA) et avec plusieurs patins oscillants (1) mobiles par rapport au corps de palier (14) et disposés à distance de l'axe longitudinal (LA) dans la direction périphérique autour de celui-ci pour supporter un arbre, dans lequel le patin oscillant individuel (1) présente respectivement une face d'appui radialement extérieure (7) destinée à s'appuyer sur une face de support sur un bloc de pression (17) guidé dans le corps de palier (14);
dans lequel le bloc de pression individuel (17) est guidé de façon librement déplaçable en direction radiale à partir d'un appui sur le corps de palier (14) dans une ouverture de passage s'étendant en direction radiale à travers le corps de palier (14), est bloqué au moyen d'un blocage de rotation contre une rotation dans la direction périphérique de l'ouverture de passage et la région d'extrémité détournée de la face d'appui se termine à fleur de la périphérie extérieure du corps de palier (14).
